# EUROPEAN PATENT APPLICATION

(11) **EP 3 733 016 A1**
(43) Date of publication of application: **04.11.2020**
(21) Application number: 20172319.4
(22) Date of filing: 30.04.2020
(51) Int. Cl.: A45C 11/00, A45F 5/00, A45C 13/02, A45C 13/18, H04B 1/3888

(54) **A CASE FOR AN ELECTRONIC TELECOMMUNICATIONS APPARATUS**

(30) Priority: 30.04.2019 IT 201900006450
(71) Applicant: COMP@RTS S.r.l., 26900 Lodi (LO) (IT)
(72) Inventor: Contardi, Ettore, 29121 Piacenza (PC) (IT)
(74) Representative: Fisauli, Beatrice A. M.

(57) **Abstract**

The invention relates to a case for an electronic telecommunications apparatus, said case comprising at least one hollow body (2) with at least one internal compartment (8) provided with an inlet (4) and at least one tightly fitting cover (3) to close this inlet (4), said body (2) and cover (3) both being made of graphite or comprising at least one layer of graphite.

## Description

The present invention relates to a case for electronic telecommunications apparatus. In particular, the present invention relates to a case for said apparatus of portable type. Even more in particular, this case performs a function of protective shielding from electromagnetic waves, specifically radio waves, for an apparatus of this type.

The invention falls within the general field of protective devices for portable electronic telecommunications apparatus. Apparatus that typically have need of a case of this type are, for example, generally mobile phones, smartphones, tablets and smartwatches. The case according to the present invention relates to these apparatus, and, more in general, to all portable electronic telecommunications apparatus provided with an antenna for wireless communication.

This case mainly performs a function of protecting the apparatus placed therein from actions through external access.

However, for reasons intrinsic to the function performed by said case, the latter can be positioned in full view, for example on a desk or another piece of furniture, and therefore also becomes a design object.

Cases used to date for said electronic apparatus fulfil different functions, mainly those of protecting them from dust, light impacts, scratches and of facilitating transport. Therefore, these cases are made of materials suitable for those functions, such as cloth, elastic materials, leather, and if necessary are provided with suitable accessories, such as handles, loops and belts.

There is an increasing use of these portable electronic apparatus and, above all, they have become a necessary tool for many people, and not only for work.

Moreover, these apparatus are provided with increasingly sophisticated technologies.

These technologies have been developed to the point that said portable electronic telecommunications apparatus can also be used as a medium for spying, i.e., as a medium that allows information belonging to the holder of the portable electronic telecommunications apparatus to be covertly obtained, without the owner of this apparatus being aware of this and, naturally, consenting to the transfer of information.

In some cases, merely switching off the portable electronic telecommunications apparatus is not enough to prevent a portable electronic telecommunications apparatus from becoming a medium for spying. In fact, technology in the telecommunications sector has progressed to the point that the microphone and/or video camera of these portable apparatus can be switched on and controlled remotely by third parties, who can therefore learn, for example, of the content of conversations, and/or of visual and/or of sound signals, which occur in the vicinity of the portable electronic telecommunications apparatus.

This possibility of spying is naturally undesirable and feared. For example, at present, industrial espionage can exploit these media to learn of the corporate development plans decided by top management during the meetings of competitors.

Other information relating to the holder of the apparatus, information that can be improperly disclosed to third parties, is the geographical position of the apparatus and, consequently, most probably also of the holder.

Currently, this type of information espionage can be thwarted, for example, by taking the precaution of removing the SIM card and/or the battery, where possible, from the electronic apparatus.

However, this measure has the drawback of being rather impractical and of running the risk of losing the SIM card, in view of its small size, or the battery.

Alternatively, the person can leave the electronic telecommunications apparatus in another place or, for example, keep it at a distance that does not enable the microphone or video camera to pick up sensitive sounds or images. The drawbacks of both these solutions are evident, without detracting from the fact that information on the geographical position can still be spied on.

Therefore, there is an increasing need to be able to make use of a more practical and easy method to solve the aforesaid problem posed by latest generations of portable electronic telecommunications apparatus.

The object of the present invention is to provide a way of overcoming the aforesaid drawbacks. This way is by means of a case that can contain, and totally enclose, at least one portable electronic telecommunications apparatus, and which is made of a material that does not allow electrical and/or electromagnetic waves to pass through, so that the apparatus contained, and completely enclosed, in the case is totally isolated from the outside and, consequently, from being switching on and controlled remotely by third parties.

The first advantage of this case is that it is not necessary to switch off the apparatus before inserting it into the case, nor is it necessary to remove the SIM card or battery to isolate the apparatus.

Another advantage is that this case can be of portable type as, being made with a material with low specific weight, it has limited dimensions and weight.

The advantage of being a portable case is that holders of electronic apparatus can keep it with them and use it promptly in any circumstances in which they consider it necessary to shield their apparatus.

A further advantage is given by the fact that the case is safe both because it totally shields said electronic apparatus and because the holders of apparatus can keep the shielded apparatus with them instead of entrusting them to third parties.

Yet another advantage of the case according to the invention is that of completely blocking the electromagnetic waves emitted by the apparatus. This makes it possible to take the apparatus to places in which said electromagnetic waves could be damaging or harmful, or even merely to limit the absorption of said waves by holders when, although having the apparatus with them, it is not in use.

Therefore, the present invention relates to a case for electronic telecommunications apparatus, said case comprising at least two components, namely at least one hollow body provided with an inlet and at least one tightly fitting cover to close this inlet. Said body and said cover are both made of graphite or comprise at least one layer of graphite.

In the context of the present invention, the term graphite refers to graphite in the strict sense, which is obtainable by means of different processes, such as isostatic graphite, carbographite, extruded graphite or pressed graphite, but also to materials prevalently made of carbon, such as carbon fibre composites or the like.

The hollow body has a cavity inside which said electronic telecommunications apparatus can be housed. In other words, the cavity has dimensions that allow at least one electronic telecommunications apparatus to be housed.

The electronic apparatus is inserted into the hollow body through said inlet. The inlet is thus of suitable dimensions to allow the insertion of said electronic apparatus into the hollow body.

Preferably, the hollow body has only one inlet.

According to a particular embodiment, said body comprises a single cavity of dimensions that allow two or more of said electronic apparatus to be housed.

According to another embodiment, the hollow body is provided internally with at least two compartments separated from each other by at least one partition. Each of said compartments has dimensions that allow at least one electronic apparatus to be housed.

As mentioned, the hollow body is closed by means of the cover, which is, typically, a cap.

According to a preferred embodiment, the cap comprises at least two parts, at least one part of which rests on the edge that defines said inlet.

In said cap, said at least two parts can have identical or different shapes to each other. Naturally, said at least two parts have different dimensions to each other, as the cap has one male part that can be inserted into said inlet and be tightly fitting.

Returning to the partition, if present, said partition can be made of various materials.

According to a first embodiment, said material is of shielding type in relation to the aforesaid waves, thus can also be made of graphite, like the material of the case. In this embodiment, each housing can have its own inlet and its own cover or two or more housings can have a common inlet. In this latter case, said inlet has sufficiently large dimensions to be able to insert at least the same number of electronic apparatus as the number of housings that can be accessed.

According to another embodiment, said partition is made of a material other than graphite, for example a soft material; in this case, the partition only avoids mechanical contact between apparatus. In this embodiment, typically, the inlet has sufficiently large dimensions to be able to insert at least the same number of electronic apparatus as the number of compartments that can be accessed.

As mentioned above, the case according to the present invention is mainly made of graphite, typically artificial graphite.

In particular, the graphite used for the case of the present invention is of isostatic (also called isotropic) type.

However, the case can be made of several materials that form superimposed layers, at least one of which is formed of graphite. Typically, the layer of graphite is the innermost, or intermediate, layer. Externally to said layer of graphite, and/or the innermost layer in the case, a layer of a further material can be provided, at least in part, forming in this way, at least partially, a coating layer. The material that forms said further layer can be chosen at will, based on aesthetic or functional considerations, for example to make the graphite case more resistant to impacts, scratches, etc. This coating can have a very different shape and/or dimensions with respect to those of the layer of graphite, according to the design envisaged for the coating.

The body and the cover can each be produced by means of mutually assembling two or more parts. In particular, assembly can be obtained by gluing, screws or other known methods.

Preferably, said body and cover are each in one piece, therefore each is obtained starting from a single block of material, in this case graphite, modelled according to the desired shape. In this way the case ensures greater shielding.

According to an embodiment, the case can be conceived so as to allow charging of the at least one electronic telecommunications apparatus while this at least one apparatus is housed in this case. For this purpose, the case can have a sealed through hole through which cables exit, at least one end of which can be connected to the at least one apparatus housed in the case of the present invention, while the opposite end can be connected to a source of electrical power or other electrical energy supply.

According to a possible embodiment, the case can comprise a further compartment in which an energy accumulator that can be used to charge the battery of the electronic apparatus is housed.

This further compartment is preferably also surrounded by the aforesaid shielding material and can also be closed with a cover, also made of shielding material, possibly the same one that closes the main compartment(s).

According to a particular embodiment, the case can comprise a winding made of conductive material connected to the integrated accumulator. Said winding can be used as a coil to create a magnetic field through which it is possible to charge the battery of an electronic apparatus having said charging function.

Further features and details of the invention will be better understood from the description below, provided by way of non-limiting example, and from the accompanying drawings, wherein:
- Figs. 1a and 1b illustrate a representation of an exploded perspective view of the body and of the cap of a case according to an embodiment of the present invention;
- Fig. 2 is a representation of a front view of the body of the case illustrated in Fig. 1;
- Fig. 3 is a representation of a further sectional plan view of the body of the case according to the embodiment illustrated in Fig. 1;
- Fig. 4 is a representation of a perspective view of the body of a case according to another embodiment of the present invention;
- Fig. 5 is a representation of a perspective view of the body of a case according to another embodiment of the present invention;
- Fig. 6a is a representation of a perspective view of the case according to a variant of a further embodiment of the present invention;
- Fig. 6b is a representation of a perspective longitudinal sectional view along a transverse plane of the case according to the variant illustrated in Fig. 6a.

With reference to the figures, the reference numeral 1 indicates a case for an electronic telecommunications apparatus according to an embodiment of the present invention.

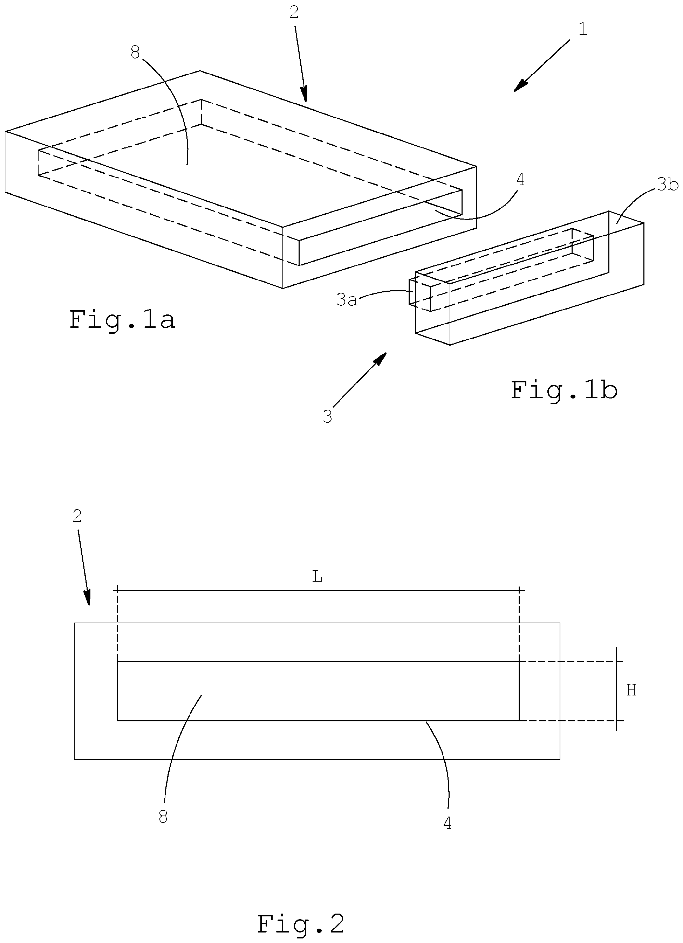

In the figures, the reference numeral 2 indicates a hollow body, which in Figs. 1a, 2-4, 6a and 6b is parallelepiped in shape, and which has at least one inlet 4 to allow insertion of the electronic apparatus into a compartment 8 of the case 1 according to the present invention.

Fig. 1b represents separately a cover 3 in the form of a cap to close said inlet 4. In particular, the cap is formed of two parts 3a, 3b, of which the part 3a is adapted to be inserted at least partially into the inlet 4 in order to close the compartment 8.

As can be seen clearly in the accompanying drawings and understood from the description, each of the components forming the case according to the present invention generally has a continuous surface, i.e., the surface has no through holes. However, according to an alternative embodiment (not illustrated in the drawings) described above, the case can have at least one through hole (typically adapted for the passage of cables); in this case the at least one hole is sealed, to prevent the passage of said electromagnetic waves. Moreover, with reference to two contiguous components and at mutually facing profiles, the profile of the first component abuts completely and perfectly with the profile of the second component.

In the example in the figure, both said parts 3a, 3b of the cover 3 are parallelepiped in shape; more in detail, the part 3a, typically has smaller dimensions with respect to the other 3b and slightly smaller width and length with respect to those of the inlet 4.

The case according to the present invention has the body 2 with graphite walls of a thickness that typically varies from 1 to 100 mm, preferably from 2 to 50 mm.

The compartment 8 preferably is also substantially parallelepiped in shape or, in any case, slotted, i.e., with one of the three dimensions flattened. The dimensions of the compartment can vary according to the type of electronic apparatus to be contained (smartphone, tablet, etc.) and to the number of these apparatus.

For example, in the event of a case suitable to contain a smartphone, the compartment has a thickness H that typically varies from 5 mm to 25 mm, a width L that typically varies from 40 mm to 100 mm and a depth P that typically varies from 100 mm to 200 mmm.

Each of the outer walls of the case, which laterally delimit a compartment 8, has a thickness that typically varies from 2 mm to 50 mm, or even more.

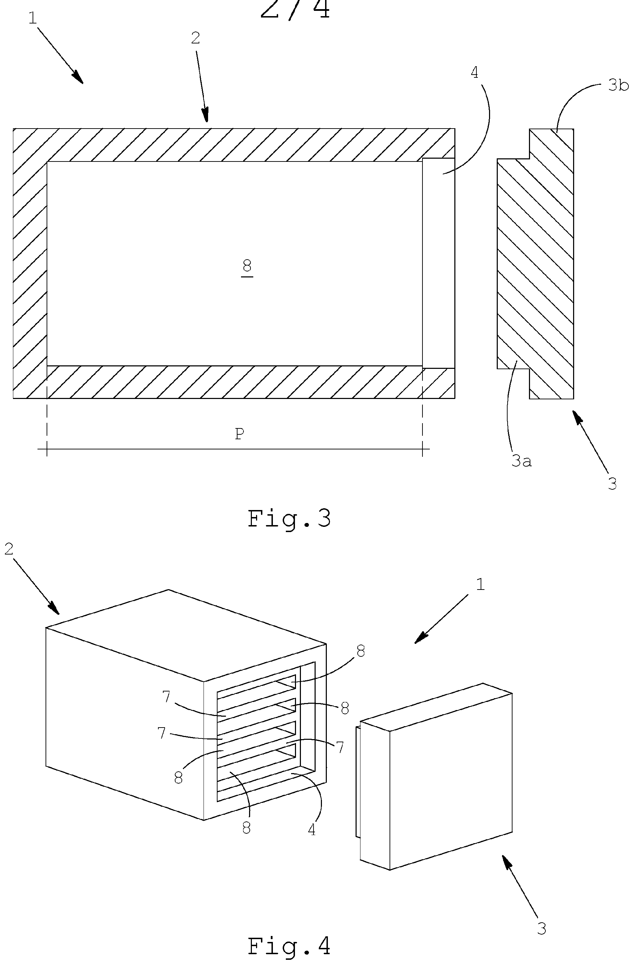

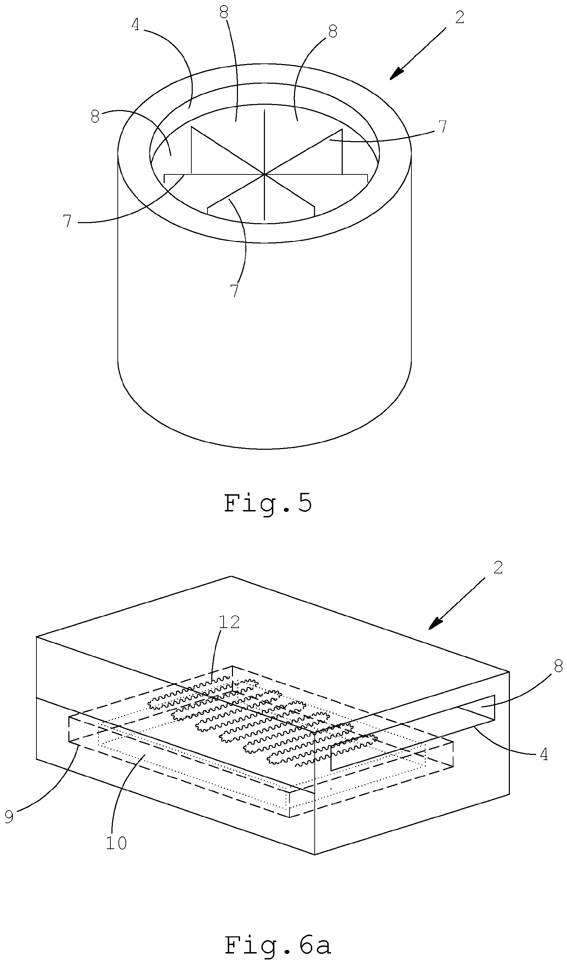

In the accompanying Figs. 4 and 5, the case according to the present invention has partitions 7 that divide the hollow body 2 into several compartments 8 suitable to house at least the same number of electronic apparatus.

Moreover, the case can be conceived to house the one or more apparatus in a horizontal (Figs. 1 and 4) or vertical (Fig. 5) position. In Figs. 4 and 5, the hollow body 2 has several partitions 7, respectively arranged horizontally and vertically.

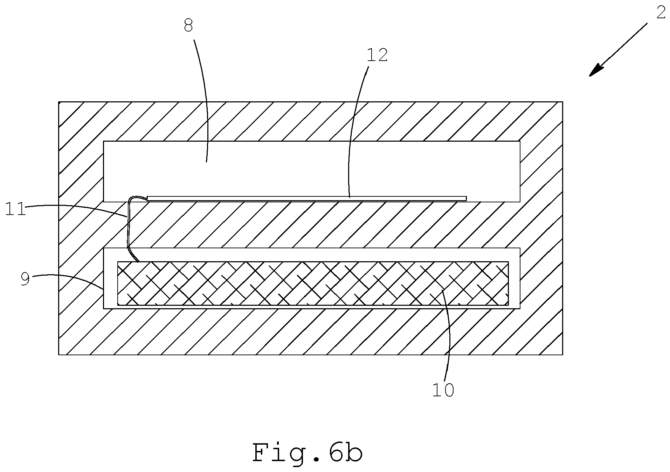

According to the embodiment illustrated in Figs. 6a and 6b, the case has a further compartment 9 adapted to house an energy accumulator 10, typically a battery.

The case further comprises an electrical winding 12 connected to the battery 10 by means of a cable 11. Said winding is preferably affixed on an inner wall of the compartment 8 and possibly covered by a layer of protective material. The winding 12 is adapted to generate a magnetic field to charge an electronic apparatus configured for this purpose.

The compartment 9 of the battery 10 is typically separated from the compartment 8 of the apparatus by a partition 7b. The cable 11 typically passes through said partition 7b in order to house the winding 12 in the compartment 8.

According to an embodiment, not illustrated, the cable 11 is connected at one end to the battery 10 and at the other end has a charging connector for charging the battery of the apparatus.

According to the embodiments illustrated, the body 2 of the case and the cover 3 are made entirely of graphite. The internal partitions 7, 7a can also be made of the same material or of different materials.

According to another variant of the present invention, the case can have a coating, typically outer, but possibly also inner.

This outer coating is typically, but not necessarily, made of a different material to the graphite material underneath of which the actual case is made.

The coating, outer and/or inner, can be made of any natural or synthetic material. For example, it can be made completely, or in part, of a flexible or elastic, or rigid, polymer material. This material can be thermoplastic or thermosetting. In these cases, the coating can preferably by produced by molding. The coating, usually the outer one, if necessary, can be made at least in part of a rigid material, such as wood or other materials.

Finally, this outer coating may or may not have the same generic shape as the graphite material below.

The invention has been described for illustrative non-limiting purposes, according to some preferred embodiments. Therefore, those skilled in the art can make changes or variants that must be considered included in the scope of protection of the present invention.

## Claims

1. A case (1) for an electronic telecommunications apparatus, said case comprising at least a hollow body (2) with at least one internal compartment (8) provided with an inlet (4) and at least one tightly fitting cover (3) to close this inlet (4), said body (2) and cover (3) both being made of graphite or comprising at least one layer of graphite.

2. The case (1) according to the preceding claim, wherein the cover (3) is in the form of a cap comprising at least one part (3a) that rests on the edge that defines said inlet (4).

3. The case (1) according to any one of the preceding claims, wherein said hollow body (2) is provided internally with at least one partition (7) that separates at least two compartments (8) inside said hollow body (2).

4. The case (1) according to the preceding claim, wherein the partition (7) is made of graphite or of a soft material.

5. The case (1) according to any one of the preceding claims, comprising a coating adapted to at least partially coat the body (2), said coating being made of a different material to that of said body (2).

6. The case (1) according to any one of the preceding claims, wherein the body (2) has a further compartment (9), separated from the compartment (8) by a partition (7b), in which a battery (10) is housed, a cable (11) being provided to connect the battery (10) to a charging connector or to an electrical winding (12), arranged in the compartment (8), to charge the battery of the electronic apparatus.

7. The case (1) according to any one of the preceding claims, wherein the graphite is chosen from isostatic graphite, carbographite, extruded graphite, pressed graphite.
